# EUROPÄISCHE PATENTSCHRIFT

(11) **EP 1 472 063 B1**
(45) Veröffentlichungstag und Bekanntmachung des Hinweises auf die Patenterteilung: **26.07.2006**
(21) Anmeldenummer: 02791818.4
(22) Anmeldetag: 13.12.2002
(51) Int. Cl.: B29C 41/04, B29C 41/22, B29C 35/08

(54) **IM SCHLEUDERVERFAHREN HERGESTELLTES MEHRSCHICHTIGES KUNSTSTOFFROHR UND VERFAHREN ZU SEINER HERSTELLUNG**
MULTI-LAYER PLASTIC PIPE PRODUCED BY MEANS OF ROTATIONAL CASTING AND METHOD FOR ITS MANUFACTURING
TUBE EN MATIERE PLASTIQUE MULTICOUCHE PRODUIT AU MOYEN D'UN PROCEDE DE ROTOMOULAGE ET PROCEDE POUR LE FABRIQUER

(30) Priorität: 08.02.2002 DE 10205191
(43) Veröffentlichungstag der Anmeldung: 03.11.2004
(73) Patentinhaber: Hobas Engineering GmbH, 9020 Klagenfurt (AT)
(72) Erfinder: KNAUDER, Josef, A-9500 Villach (AT)
(74) Vertreter: Becker, Thomas
(86) Internationale Anmeldenummer: PCT/EP2002/014178
(87) Internationale Veröffentlichungsnummer: WO 2003/066303

(56) Entgegenhaltungen:
- EP-A- 0 533 482
- DE-A- 2 109 643

## Beschreibung

Die Erfindung betrifft ein im Schleuderverfahren hergestelltes mehrschichtiges Kunststoffrohr. Geschleuderte Kunststoffrohre und Verfahren zu ihrer Herstellung werden beispielhaft in der EP 360 758 A2 und CH 684 326 A5 beschrieben.

Die DE 21 09 643 A beschreibt ein Verfahren zur Herstellung zylindrischer Hohlkörper, wie Rohre, in einer rotierenden Form, wobei die Rohstoffe, wie Harz, über Düsen zur Schichtbildung aufgetragen werden. Bei dem bekannten Verfahren werden die verschiedenen Schichten nacheinander aufgebracht, mittels Rollen oder dergleichen verdichtet und im Anschluss daran werden alle Schichten gemeinsam durch Einwirkung von Wärme, ultraviolettbestrahlung oder andere Verfahren verfestigt.

In der EP 0 533 482 A1 werden Verfahren zur Herstellung von Rohren für elektrophotographische Anwendungen beschrieben, die ebenfalls mit UV-Licht gehärtet werden können.

Zwecks Bildung einzelner Schichten werden beim Schleuderverfahren unterschiedliche Harzmischungen und/oder Füllstoffe einer rotierenden Matrize zugeführt. Der Aufbau der einzelnen Schichten und ihre Stärke richtet sich nach dem jeweiligen

Anwendungszweck. Obwohl die Aushärtung des verwendeten Harzes ein exothermer Vorgang ist, ist es notwendig, dem System Wärme zuzuführen, um die Aushärtungsreaktion mit dem Ziel einer Produktivitätserhöhung zu beschleunigen. Gleichwohl kann es dabei zur Abdampfung von Monomeren aus der Harzmischung kommen.

Obwohl sich das vorbeschriebene Herstellungsverfahren und die danach hergestellten Rohre beispielsweise in der Abwassertechnik nicht nur bewährt haben, sondern beispielsweise gegenüber Steinzeug- oder Betonrohren auch durchgesetzt haben, besteht das Bedürfnis, die Herstellungstechnologie zu vereinfachen, etwaige Umweltbelastungen so gering wie möglich zu halten und die Kosten zu senken.

Zur Erreichung dieses Ziels sieht die Erfindung vor, auf die beschriebene Aushärtung des verwendeten Harzes durch Wärme zumindest teilweise zu verzichten und stattdessen ein Harz einzusetzen, welches durch Licht spezifischer Wellenlänge härtbar ist. Die Erfindung schlegt ein Verfahren gemäß Anspruch 1 und eine Kunststoffrohr nach Anspruch 10 var.

Die zu härtende Schicht kann aus einer mehr oder weniger reinen Harzmischung (zum Beispiel einer polymerisierbaren ungesättigten Verbindung in Kombination mit einem Polymerisations-Initiator) bestehen. Die Härtung erfolgt mit Licht der Wellenlänge 380 bis 780 nm (sichtbares Licht) oder Licht der Wellenlänge 780 bis 1.200 nm (nahe Infrarot).

Grundsätzlich gilt die Regel: "je länger die Wellenlänge, um so höher die Eindringtiefe". Daraus folgt, dass unter Verwendung von sichtbarem Licht oder Licht nahe dem infraroten Bereich auch Schichten ausgehärtet werden können, die Fremdstoffe enthalten, beispielsweise Füllstoffe wie Calciumcarbonat.

Da die äußere Schicht eines Rohres in mehrfacher Hinsicht besonderen Anforderungen ausgesetzt ist (zum Beispiel bezüglich mechanischer Festigkeit, Lichteinfluß, Härte, Homogenität), sieht eine Ausführungsform der Erfindung vor, die äußere Umfangsschicht des Rohres aus einem mittels Licht gehärteten Harz auszubilden. Diese Schicht kann Füllstoffe enthalten, wobei nach verschiedenen Ausführungsformen der Füllstoffgehalt < 10 beziehungsweise < 5 Gew.-% gewählt wird; nach einer weiteren Ausführungsform ist vorgesehen, eine füllstofffreie Harzschicht als äußere Umfangsschicht zu wählen. Diese kann besonders einfach und besonders schnell mittels Licht gehärtet werden, wenn sie beispielsweise aus einer polymerisierbaren ungesättigten Verbindung in Kombination mit einem Polymerisationsinitiator gebildet wird.

Bei einer Schichtdicke von beispielsweise 2 bis 3 mm läßt sich bereits in weniger als 10 Minuten eine ausgehärtete Schicht bilden. Aufgrund der kurzen Aushärtezeit tritt eine Abdampfung von Monomeren, beispielsweise eine Styrol-Abdampfung, gar nicht oder in deutlich verringertem Umfang gegenüber dem Stand der Technik auf. Gleichzeitig wird die Produktivität erhöht und Energie (zum Beispiel für das Aufheizen einer Aushärtungsflüssigkeit) gespart.

Kurzfristig kann der Aufbau weiterer Schichten folgen, und zwar entweder mit der gleichen Technologie (also durch Lichthärtung der verwendeten Harze) oder mittels der bekannten Verfahrenstechnik (mittels Wärme).

In gleicher Weise wie vorstehend beschrieben bietet es sich an, auch die innere Abdeckschicht des Rohres aus einer lichtgehärteten Harzschicht zu bilden, und zwar wiederum mit gegebenenfalls geringen Füllstoffanteilen wie beschrieben oder gar füllstofffrei. Dabei stellen sich die gleichen Vorteile ein wie vorstehend mit Bezug auf die äußere Umfangsschicht genannt.

Soweit zwischen innerer und äußerer Schicht konventionelle Harzmischungen verwendet werden, die mittels Wärme ausgehärtet werden (müssen), ist dies in Bezug auf eine Abdampfung von Monomeren dann unschädlich, wenn innere und äußere Schicht erfindungsgemäß ausgebildet sind, das heißt, bereits ausgehärtet sind und damit eine Abdampfung der Monomere verhindern.

Die Bestrahlung der innerhalb der Matrize aufgebrachten Schichten kann auf einfache Weise durch eine Lampe erfolgen, die an der Lanze mitgeführt wird, über die die Rohstoffe in die Matrize zugeführt werden. Eine solche Lampe kann zum Beispiel eine Metall-Halogenid-Lampe sein.

Bei der Herstellung von Trinkwasserrohren kommt es darauf an, dass das Rohr innenseitig eine Beschichtung aufweist, die jeglichen Austritt von Schadstoffen in das Trinkwasser verhindert. Dies erfordert im Stand der Technik die Verwendung ausgewählter Reinharze (Polyesterharze) mit der entsprechenden Trinkwassertauglichkeit. Gerade diese Harze benötigen eine hohe Startertemperatur zur Aushärtung. Der erfindungsgemäße Vorschlag schafft auch hier erhebliche Vorteile, indem-die Innenschicht aus einem Material gebildet wird, welches mittels Licht in sehr kurzer Zeit effektiv härtbar ist.

Wie bereits erwähnt, können geeignete Materialien aus einer polymerisierbaren ungesättigten Verbindung in Kombination mit einem Polymerisationsinitiator (Starter) gebildet werden. Bei den genannten polymerisierbaren ungesättigten Verbindungen kann es sich beispielsweise um eines der folgenden Harze handeln: ungesättigtes Polyesterharz, Vinylesterharz, Polyester-Acrylsäure- oder -Methacrylsäure-Kondensationsharz, ethylenisch ungesättigte Gruppen enthaltendes Polyurethanharz, Phosphor enthaltendes Vinylesterharz etc. Der zu verwendende Polymerisationsinitiator kann beispielsweise eine organische Borverbindung der Formel: 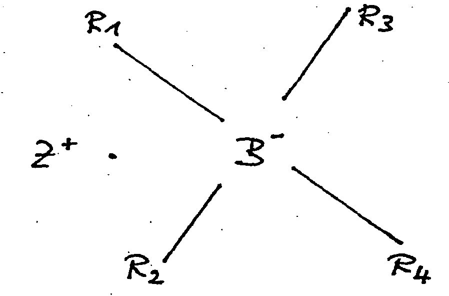 sein, worin R₁, R₂, R₃ und R₄ jeweils unabhängig eine, gegebenenfalls substituierte Alkyl-, Aryl-, Allyl-, Aralkyl-, Alkenyl- oder heterocyclische Gruppe sein kann oder ein Halogenatom und Z⁺ ein Kation darstellt, wobei die Borverbindung eine saure Verbindung enthält. Diese saure Verbindung wiederum kann ein latentes Säureerzeugungsmittel sein, das eine Säure durch Bestrahlung mit Licht und/oder durch Wärme bildet, beispielsweise eine organische Sulfoniumverbindung.

Wenngleich die lichtgehärtete Schicht innerhalb des geschleuderten Kunststoffrohres in der Regel eine maximale Dicke von 2 bis 3 mm aufweist, so sind durchaus, je nach Füllstoffgehalt, auch größere Schichtdicken (bis 10 mm oder darüber) möglich. Prinzipiell gilt die Regel: je reiner das Harz, um so dicker kann die Schicht ausgebildet werden, um in einem zeitlich akzeptablen Rahmen ausschließlich mit Licht gehärtet zu werden. Dabei ist es möglich, parallel zur Lichthärtung weitere Härtungsverfahren durchzuführen, beispielsweise mit Peroxid.

Ein erfindungsgemäß hergestelltes Rohr weist mindestens eine lichtgehärtete Harzschicht auf, das heißt es können auch zwei oder mehr Schichten lichtgehärtet sein. Diese Schichten können nebeneinander liegen oder durch Zwischenschichten voneinander getrennt sein. Die weiteren Schichten können in ihrem Aufbau und ihrer Zusammensetzung denen gemäß Stand der Technik entsprechen. Beispielsweise können einzelne Schichten mehr oder weniger hohe Anteile an Glasfasern aufweisen, andere Schichten mit Füllstoffen unterschiedlicher Provenienz angereichert sein, die wiederum von reinen Harzschichten oder Harz/Sand-Schichten voneinander getrennt sein können.

Ein weiterer Vorteil der Lichthärtung besteht darin, dass diese an der Oberfläche beginnt, wenn die äußere Schicht lichtgehärtet wird, während im Stand der Technik die Aushärtung erst nach Aufbringung mehrerer Schichten mittels Wärme durchgeführt wird und dann von innen nach außen verläuft. Auch aus diesem Grund ist die Härtungszeit bei der Lichthärtung gegenüber der Wärmehärtung deutlich verringert.

## Patentansprüche

1. Verfahren zur Herstellung eines mehrschichtigen Kunststoffrohrs, bei dem zwecks Bildung einzelner Schichten aushärtbares Harz und gegebenenfalls Füllstoffe einer rotierenden Matrize zugeführt werden, **dadurch gekennzeichnet, dass** das Harz mindestens einer Schicht mittels sichtbarem Licht der Wellenlänge 380 nm bis 780 nm oder Litcht des Nah-Infrarotbereichs der Wellenlänge 780 bis 1200 nm gehärtet wird.

2. Verfahren nach Anspruch 1, bei dem das Harz einer äußeren Umfangsschicht mittels Licht gehärtet wird.

3. Verfahren nach Anspruch 1, bei dem das Harz einer inneren Umfangsschicht mittels Licht gehärtet wird.

4. Verfahren nach Anspruch 2 oder 3, bei dem die innere Umfangsschicht, die äußere Umfangsschicht oder beide Umfangsschichten mit weniger als 10 Gew.-% Füllstoff erstellt werden.

5. Verfahren nach Anspruch 2 oder 3, bei dem die innere Umfangsschicht, die äußere Umfangsschicht oder beide Umfangsschichten mit weniger als 5 Gew.-% Füllstoff erstellt werden.

6. Verfahren nach Anspruch 2 oder 3, bei dem die innere Umfangsschicht, die äußere Umfangsschicht oder beide Umfangsschichten ohne Füllstoffe erstellt werden.

7. Verfahren nach Anspruch 1, bei dem das Harz eine polymerisierbare ungesättigte Verbindung in Kombination mit einem Polymerisationsinitiator ist.

8. Verfahren nach Anspruch 1, bei dem die mittels Licht gehärtete Harzschicht eine Dicke < 4 mm aufweist.

9. Verfahren nach Anspruch 1, bei dem die mittels Licht gehärtete Harzschicht eine Dicke < 2 mm aufweist.

10. Im Schleuderverfahren hergestelltes mehrschichtiges Kunststoffrohr mit einer äußeren und einer inneren Umfangsschicht sowie mindestens einer dazwischen verlaufenden Zwischenschicht, wobei mindestens eine Zwischenschicht, oder die aüßere, Umfangsschicht durch direkte Einwirkung von sichtbarem Licht der Wellenlänge 380 nm bis 780 nm oder Licht des Nah-Infrarotbereichs der Wellenlänge 780-1200 nm gehärtet ist.

## Claims

1. A process for producing a multilayered plastic pipe in which, for the purpose of forming individual layers, curable resin and optionally fillers are supplied to a rotating matrix, **characterised in that** the resin in at least one layer is cured by using visible light with a wavelength of 380 nm to 780 nm or light from the near infrared region with a wavelength of 780 to 1200 nm.

2. A process according to Claim 1, in which the resin in an outer peripheral layer is cured using light.

3. A process according to Claim 1, in which the resin in an inner peripheral layer is cured using light.

4. A process according to Claim 2 or 3, in which the inner peripheral layer, the outer peripheral layer or both peripheral layers are formulated with less then 10 wt.% of filler.

5. A process according to Claim 2 or 3, in which the inner peripheral layer, the outer peripheral layer or both peripheral layers are formulated with less then 5 wt.% of filler.

6. A process according to Claim 2 or 3, in which the inner peripheral layer, the outer peripheral layer or both peripheral layers are formulated without any filler.

7. A process according to Claim 1, in which the resin is a polymerisable unsaturated compound combined with a polymerisation initiator.

8. A process according to Claim 1 in which the resin layer cured using light has a thickness of < 4 mm.

9. A process according to Claim 1 in which the resin layer cured using light has a thickness of < 2 mm.

10. A multilayered plastic pipe produced in a centrifuge process with an outer and an inner peripheral layer and also at least one intermediate layer located in between these, wherein at least one intermediate layer or the outer peripheral layer is cured by the direct action of visible light of the wavelength 380 to 780 nm or light from the near infrared region with a wavelength of 780 - 1200 nm.

## Revendications

1. Procédé de fabrication d'un tube de plastique multicouche, dans lequel, en vue de la formation des différentes couches, de la résine durcissable et, le cas échéant, des charges, sont acheminées à une matrice en rotation, **caractérisé en ce que** la résine d'au moins une couche est durcie au moyen de lumière visible de la longueur d'onde de 380 nm à 780 nm, ou au moyen de lumière de la plage du proche infrarouge de la longueur d'onde de 780 à 1200 nm.

2. Procédé selon la revendication 1, dans lequel la résine d'une couche périphérique externe est durcie au moyen de lumière.

3. Procédé selon la revendication 1, dans lequel la résine d'une couche périphérique interne est durcie au moyen de lumière.

4. Procédé selon la revendication 2 ou 3, dans lequel la couche périphérique interne, la couche périphérique externe ou les deux couches périphériques sont réalisées avec moins de 10 % en poids de charge.

5. Procédé selon la revendication 2 ou 3, dans lequel la couche périphérique interne, la couche périphérique externe ou les deux couches périphériques sont réalisées avec moins de 5 % en poids de charge.

6. Procédé selon la revendication 2 ou 3, dans lequel la couche périphérique interne, la couche périphérique externe ou les deux couches périphériques sont réalisées sans charges.

7. Procédé selon la revendication 1, dans lequel la résine est un composé polymérisable insaturé en combinaison avec un initiateur de polymérisation.

8. Procédé selon la revendication 1, dans lequel la couche de résine durcie au moyen de lumière présente une épaisseur de < 4 mm.

9. Procédé selon la revendication 1, dans lequel la couche de résine durcie au moyen de lumière présente une épaisseur de < 2 mm.

10. Tube de plastique multicouche fabriqué selon un procédé par centrifugation avec un couche périphérique externe et une couche périphérique interne, ainsi qu'au moins une couche intermédiaire s'étendant entre ces dernières, sachant qu'au moins une couche intermédiaire ou la couche périphérique externe sont durcies par l'effet direct de lumière visible de la longueur d'onde de 380 nm à 780 nm ou de lumière de la plage de l'infrarouge proche de la longueur d'onde de 780 nm à 1200 nm.
